# EUROPEAN PATENT APPLICATION

(11) **EP 1 883 000 A1**
(43) Date of publication of application: **30.01.2008**
(21) Application number: 06117642.6
(22) Date of filing: 21.07.2006
(51) Int. Cl.: G06F 1/16

(54) **Laptop with wireless antenna**

(71) Applicant: Dialogue Technology Corp., Jungshing Rd., Shindian (TW)
(72) Inventor: Lee, Jack, 4F., No. 9, Lane 102, Taipei (TW)
(74) Representative: Bremi, Tobias Hans

(57) **Abstract**

A laptop has a wide-area wireless module set in a base or elsewhere and an antenna set in a display or elsewhere. A transmission wire is distributed both in the base and the display to connect the wide-area wireless module and the antenna for providing the function of wide-area wireless communication

## Description

### BACKGROUND OF THE INVENTION

### 1. FIELD OF THE INVENTION

The present invention relates to a laptop, and more especially, to the laptop with wide-area wireless communication functions.

### 2. BACKGROUND OF THE RELATED ART

Communication is one of fundamental demands among people. Internet access is one kind of interaction between people and a machine. With bandwidth and charge for information packets, the third Generation (3G) mobile communication provides users with a mobile phone capable of accessing the Internet.

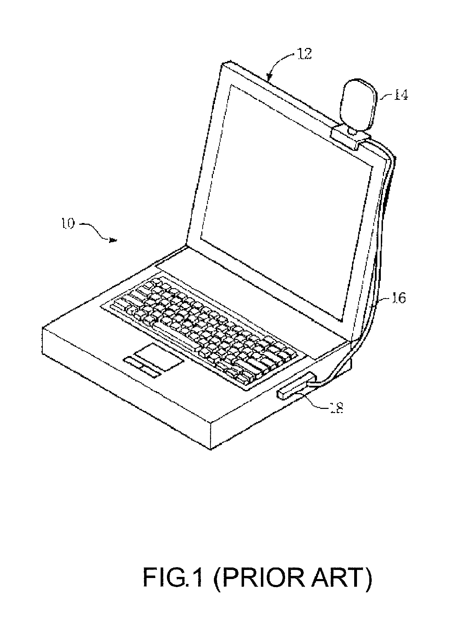

Nowadays, the 3G mobile phone with abundant color in an enlarged screen and faster speed has been developed toward the Internet network, however, it is still viewed as a "phone". It is very clear for customers to distinguish the mobile phone from a computer. On the other hand, the mobile PC, such as a laptop, is developed toward small size, lightweight and full wireless Internet access functions, but the functions of the small size, lightweight laptop are limited by the sizes of the existent electronic components. Furthermore, normally the laptop is added some certain functions in an external connected way or a detachable way. Referring to FIG.1, the Taiwan utility model number 584292 discloses that a Printed Circuit Board (PCB) antenna 14 is connected to the peripheral port of the laptop 10 by using an external hanging-component and an external exposed transmission line 16. Although the additional functions of the laptop may be added in the foregoing ways, the usage is inconvenient because maybe the external hanging-component is forgot to carry or maybe the external exposed transmission line is pulled and dragged in using to lower the entire beauty of the laptop.

### SUMMARY OF THE INVENTION

One object of this invention is to provide a laptop with a compact shell and a wide-area wireless module built in the laptop to satisfy both the demands of easy-carry and complete functions.

One object of this invention is to provide a laptop, wherein the wide-area wireless antenna is set in the side-frame of the display or elsewhere and electrically connected with the wide-area wireless module set in the base to provide the laptop with the wide-area wireless communication ability.

One object of this invention is to provide a laptop, wherein the 3G or higher wide-area wireless antenna is set in the side-frame of the display or elsewhere and electrically connected with the wide-area wireless module set in the base to improve the communication quality of the external connected components.

Accordingly, one embodiment of the present invention provides a laptop including a base; a display pivotally connected with the base; a wide-area wireless module set in the base; and a wide-area wireless antenna set in the display and electrically connected with the wide-area wireless module.

### BRIEF DESCRIPTION OF THE DRAWINGS

FIG.1 is a three-dimensional diagram illustrating a conventional laptop.
FIG.2 is a perspective diagram illustrating the laptop in accordance with an embodiment of the present invention.

### DETAILED DESCRIPTION OF THE INVENTION

The technique of the present invention is illustrated in company with the drawings. In one embodiment, a laptop includes a motherboard, peripheral ports, expansion slots, a hard disk and a memory component, etc, but in order to indicate clearly the setting positions of the components of the present invention, the above-mentioned basic components inside the laptop are omitted from the drawings.

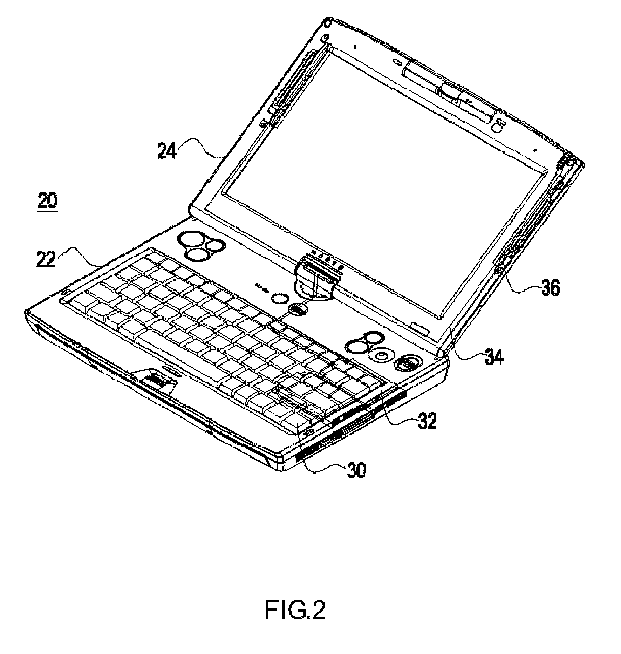

FIG.2 is a perspective diagram illustrating the compact laptop in accordance with an embodiment of the present invention. The laptop applied in the present embodiment may include a rectangular shell with the diagonal distance smaller than or equal to 29 centimeter and the entire thickness smaller than or equal to 3.2 centimeter to fit the compact demand of the laptop. However, the present invention is not limited to it, the laptop with bigger or smaller diagonal distance or thinner thickness is in the range of the present invention.

Referring to FIG.2, a compact laptop 20 includes a base 22 and a display 24. In the present embodiment, the motherboard and the electronic components, such as the hard disk, the memory, the peripheral ports, the battery, etc. are assembled in the base 22 to control the operation of the laptop 20, and an input apparatus 30 of the laptop 20, such as a keyboard, is configured on the surface of the base 22. According to the spirit of the present invention, a wide-area wireless module 32, such as a 3G or higher wireless network mini-PCI card is set in the base 22 or elsewhere. On the other hand, the display 24 is pivotally connected with the base 22 to be opened or closed, one or a plurality of the wide-area wireless antennas 36 are set in the side-frame of the display 24 or elsewhere, and the transmission lines 34 are distributed among the side-frame of the display 24 or elsewhere, the pivotal portion and the base 22 to connect the wide-area wireless antenna 36 and the wide-area wireless module 32.

Accordingly, the wide-area wireless module 32 and the wide-area wireless antennas 36 are built in the laptop 20, and the communication transmission lines are also distributed between the display 24 and the base 22. Users may connect to the Internet and fetch the information what they want anywhere and anytime whenever the laptop is under the service area of the wireless wide-area network. Compared with the conventional technique on the laptop 20 in an external connection way, the wide-area wireless apparatus of the present invention is built in the laptop 20 to increase the quality of the wireless communication and the users may test the wide-area wireless apparatus together with the quality test of the laptop. Furthermore, the function of accessing wide-area wireless network is achieved by carrying the laptop of the present invention without any additional component, which further increases the portable property of the laptop.

A laptop includes a base whose diagonal distance is smaller than 29 centimeter or equal to 29 centimeter; a display pivotally connected with the base, wherein the entire thickness of both the base and the display is smaller than 3.2 centimeter or equal to 3.2 centimeter; a wide-area wireless module set in the base; and a wide-area wireless antenna set in the display and electrically connected with the wide-area wireless module.

Although the present invention has been explained in relation to its preferred embodiment, it is to be understood that other modifications and variation can be made without departing the spirit and scope of the invention as hereafter claimed.

## Claims

1. A laptop, comprising:
a base;
a display pivotally connected with said base;
a wide-area wireless module set in said base; and
a wide-area wireless antenna set in said display and electrically connected with said wide-area wireless module.

2. The laptop according to claim 1, wherein a transmission line is distributed both in said base and said display to connect said wide-area wireless module and said wide-area wireless antenna.

3. The laptop according to claim 1, wherein said wide-area wireless module includes a 3G wireless network interface card.

4. The laptop according to claim 1, wherein said wide-area wireless antenna is a 3G wireless antenna.

5. The laptop according to claim 1, wherein one diagonal distance of said base is smaller than 29 centimeter or equal to 29 centimeter.

6. The laptop according to claim 1, wherein the entire thickness of both said base and said display is smaller than 3.2 centimeter or equal to 3.2 centimeter.

7. A laptop, comprising:
a base, wherein one diagonal distance of said base is smaller than 29 centimeter or equal to 29 centimeter;
a display pivotally connected with said base, wherein one entire thickness of both said base and said display is smaller than 3.2 centimeter or equal to 3.2 centimeter;
a wide-area wireless module set in said base; and
a wide-area wireless antenna set in said display and electrically connected with said wide-area wireless module.

8. The laptop according to claim 7, wherein a transmission line is distributed both in said base and said display to connect said wide-area wireless module and said wide-area wireless antenna.

9. The laptop according to claim 7, wherein said wide-area wireless module includes a 3G wireless network interface card.

10. The laptop according to claim 9, wherein said 3G wireless network interface card is a mini-PCI card.

11. The laptop according to claim 7, wherein said wide-area wireless antenna is a 3G wireless antenna.
